# EUROPEAN PATENT SPECIFICATION

(11) **EP 2 965 954 B1**
(45) Date of publication and mention of the grant of the patent: **22.08.2018**
(21) Application number: 15183203.7
(22) Date of filing: 27.08.2009
(51) Int. Cl.: B60R 21/23, B60R 21/0132

(54) **METHOD AND APPARATUS FOR CONTROLLING AN ACTUATABLE SAFETY DEVICE**
VERFAHREN UND VORRICHTUNG ZUR STEUERUNG EINER BETÄTIGBAREN SICHERHEITSVORRICHTUNG
PROCÉDÉ ET APPAREIL DE COMMANDE D'UN DISPOSITIF DE SÉCURITÉ POUVANT ÊTRE ACTIONNÉ

(30) Priority: 28.08.2008 US 200490; 28.08.2008 US 200516
(43) Date of publication of application: 13.01.2016
(62) Divisional of application: 09810551.3
(73) Proprietor: TRW Automotive U.S. LLC, Livonia, Michigan 48150 (US)
(72) Inventor: FOO, Chek-Peng, Ann Arbor, MI 48105 (US); COUTURE, Tongtong Wang, Livornia, MI 48150 (US); XU, Quanbo, Livonia, MI 48150 (US); LIU, Wei, Livonia, MI 48150 (US); CHENG, Xiaoliang, Livonia, MI 48150 (US); WANG, Hongmei, Livonia, MI 48150 (US); HUANG, Yueyi, Livonia, MI 48150 (US); WANG, Yan, 200433 Shanghai (CN); YEH, Huahn-Fern, Novi, MI 48374 (US); WEISS, Kevin Daniel, Royal Oak, MI 48073 (US); MUDALIAR, Nikhil Bhaskar, Ann Arbor, MI 48105 (US); GHANNAM, Lila, Northville, MI 48168 (US); SUMNER, Paul, Leo, Farmington Hills, MI 48335 (US)
(74) Representative: Emde, Eric

(56) References cited:
- US-A1- 2002 147 533
- US-A1- 2002 163 170
- US-A1- 2007 005 207

## Description

### Field of the Invention

The present invention relates to a method and apparatus for determining a vehicle crash condition and, in particular, to a method and apparatus for controlling an actuatable vehicle safety device in response to determining the occurrence of a vehicle crash condition.

### Background of the Invention

Actuatable occupant restraint systems are used to help protect occupants of a vehicle in a vehicle crash event. Such actuatable occupant restraint systems may include an inflatable occupant restraint device, such as an air bag, to help protect a vehicle occupant upon the determined occurrence of a vehicle crash event.

US 5,935,182 A discloses a method and apparatus for determining such crash events and is particularly directed to discriminating a vehicle crash condition using virtual crash sensing. US 6,036,225 A discloses a method and apparatus for controlling a multistage actuatable restraining system in a vehicle using crash severity index values. US 6,186,539 A discloses a method and apparatus for controlling a multistage actuatable restraining device using crash severity indexing and crush zone sensors.

US 2007/0005207 A1 discloses a method and apparatus for controlling an actuatable restraining device using side satellite accelerometers. More specifically, US 2007/0005207 A1 discloses an apparatus for controlling a vehicle actuatable occupant restraining system including a crash accelerometer for sensing frontal crash acceleration and providing a first crash acceleration signal indicative thereof. A side crash accelerometer senses transverse crash acceleration and provides a second crash acceleration signal indicative thereof.

A controller actuates the actuatable occupant restraining system in response to the first crash acceleration signal and the transverse crash acceleration signal.

### Summary of the Invention

The present invention is directed to a method for determining a crash condition of a vehicle, as set forth in claim 1 or in claim 7.

In accordance with another aspect of the present invention, an apparatus for determining a crash condition of a vehicle is provided as set forth in claim 8.

Preferred embodiments of the present invention may be gathered from the dependent claims.

### Brief Description of the Drawings

The foregoing and other features and advantages of the present invention will become apparent to one skilled in the art upon consideration of the following description of the invention and the accompanying drawings, in which:
Fig. 1 is a schematic top view of a vehicle having an actuatable occupant restraint system in accordance with an example embodiment of the present invention;
Fig. 2 is a functional block diagram of the control portion of the apparatus of Fig. 1;
Fig. 3 is a functional block diagram showing a first part of a control process used by the control portion of Fig. 2 in accordance with one example embodiment of the present invention;
Fig. 4 is a functional block diagram showing a second part of the control process shown in Fig. 3; and
Fig. 5 is a functional block diagram showing part of a control process used by the control portion of Fig. 2 in accordance with a second example embodiment of the present invention.

### Detailed Description

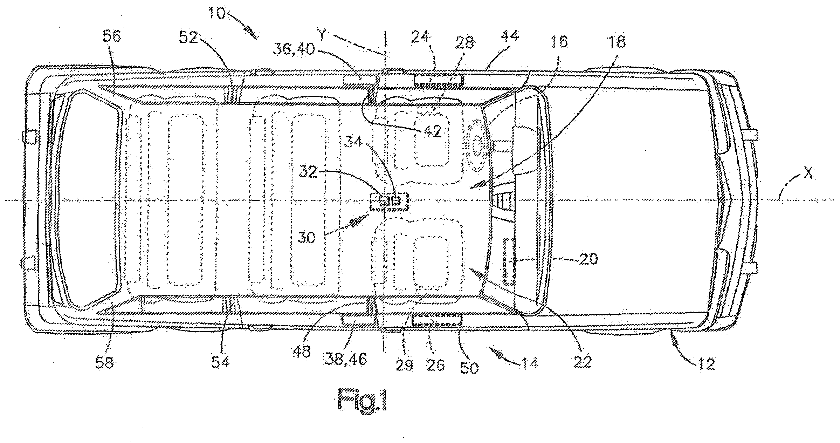

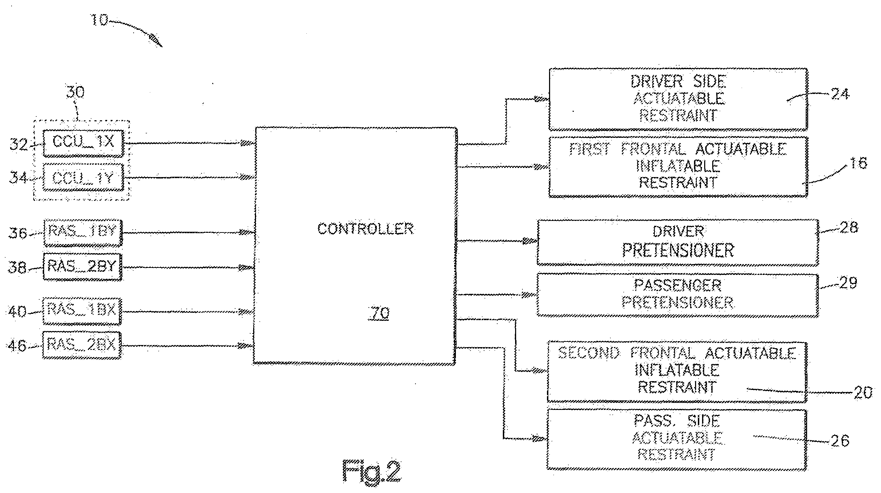

Referring to Figs. 1 and 2, an apparatus 10 is mounted in a vehicle 12 for determining a crash condition of the vehicle and controlling actuation of an actuatable occupant restraint system 14, in accordance with an example of the present invention. The actuatable occupant restraint system 14 comprises, for example, a first frontal inflatable occupant restraint device 16, such as a steering wheel-mounted air bag module, located on a driver side 18 of the vehicle 12. The actuatable occupant restraint system 14 may also comprise a second frontal inflatable occupant restraint device 20, such as an instrument panel-mounted air bag module, located on a passenger side 22 of the vehicle 12.

The actuatable occupant restraint system 14 may further comprise a first side impact inflatable occupant restraint device 24, such as a door-mounted air bag module, a seat-mounted air bag module, or a roof rail-mounted curtain air bag module, located on the driver side 18 of the vehicle 12. The first side impact inflatable occupant restraint device 24 may alternatively be located anywhere in or adjacent to side structure of the vehicle 12, such as the side pillars and/or side body panels. The actuatable occupant restraint system 14 may still further comprise a second side impact inflatable occupant restraint device 26, such as a door-mounted air bag module, a seat-mounted air bag module, or a roof rail-mounted curtain air bag module, located in or adjacent to side structure on the passenger side 22 of the vehicle 12. The actuatable occupant restraint system 14 may yet further or alternatively comprise an actuatable seat belt occupant restraint device, such as a driver side: seat belt pretensioner 28 and/or a passenger side seat belt pretensioner 29. The actuatable occupant restraint system 14 may additionally or alternatively comprise any actuatable occupant restraint device that helps to protect a vehicle occupant in response to an impact to the vehicle 12.

The occupant restraint devices 16, 20, 24, 26, 28 and 29 of the actuatable occupant restraint system 14 are actuatable restraint or safety devices of the vehicle 1 2, Other actuatable restraint or safety devices of the vehicle 12 that may be actuated in response to an impact to or a crash condition of the vehicle include vehicle door locks (not shown) and may include a suspension control system (not shown), a deployable roll bar (not shown), and an external air bag (not shown) or other inflatable devices internal or external to the vehicle.

The apparatus 10 further comprises a collision or crash sensor assembly 30 located at a substantially central location in the vehicle 12. The sensor assembly 30 includes a first crash acceleration sensor 32, such as an accelerometer, having its axis of sensitivity oriented to sense crash acceleration in a direction substantially parallel to a longitudinal or front-to-rear axis of the vehicle 12. The longitudinal or front-to-rear axis of the vehicle 12 is designated the X-axis in Fig. 1. The first crash acceleration sensor 32 provides a crash acceleration signal designated CCU_1X. The sensor assembly 30 also comprises a second crash acceleration sensor 34, such as an accelerometer, having its axis of sensitivity oriented to sense crash acceleration in a direction substantially parallel to a transverse or side-to-side axis of the vehicle 12. The transverse or side-to-side axis of the vehicle 12 is designated the Y-axis in Fig. 1 and is oriented substantially perpendicular to the X-axis. The second crash acceleration sensor 34 provides a crash acceleration signal designated CCU_1Y.

The first crash acceleration sensor 32, in accordance with one example embodiment of the present invention has a nominal sensitivity of ± 100g's (g being the value of acceleration due to earth's gravity, i.e., 32 feet per second squared or 9.8 meters per second squared). The second crash deceleration sensor 34, in accordance with one example embodiment of the present invention, has a nominal sensitivity of ± 20g's.

The crash acceleration signals CCU_1X and CCU_1Y from the crash acceleration sensors 32 and 34, respectively, can take any of several forms. Each of the crash acceleration signals CCU_1X and CCU_1Y can have amplitude, frequency, pulse duration, and/or any other electrical characteristic that varies as a function of the sensed crash acceleration, In the example embodiment shown in Figs. 1 and 2, the crash acceleration signals CCU_1X and CCU_1Y have frequency and amplitude characteristics indicative of the sensed crash acceleration, i.e., that vary as a function of the sensed crash acceleration. Thus, each of the crash acceleration signals CCU_1X and CCU_1Y has an electrical characteristic functionally related to the sensed crash acceleration along the axis of sensitivity of the corresponding crash acceleration sensor 32 or 34, respectively.

The apparatus 10 may also include two driver side satellite crash acceleration sensors 36 and 40 located in or adjacent or near to a side structure on the driver side 18 of the vehicle 12, such as in the driver side vehicle B-pillar 42 or in the driver side door 44. The side satellite crash acceleration sensor 36 has an axis of sensitivity oriented to sense crash acceleration in a direction substantially parallel to the vehicle's Y-axis and provides a signal designated RAS_1BY. The side satellite crash acceleration sensor 40 has an axis of sensitivity oriented to sense crash acceleration in a direction substantially parallel to the vehicle's X-axis and provides a signal designated RAS_1BX. Although the side satellite crash acceleration sensors 36 and 40 are described as being separate sensors, they may be combined in a single XY sensor.

The apparatus 10 may further include two passenger side satellite crash acceleration sensors 38 and 46 located in or adjacent or near to a side structure on the passenger side 22 of the vehicle 12, such as in the passenger side B-pillar 48 or in the passenger side door 50. The side satellite crash acceleration sensor 38 has an axis of sensitivity oriented to sense crash acceleration in a direction substantially parallel to the vehicle's Y-axis and provides a signal designated as RAS_2BY. The side satellite crash acceleration sensor 46 has an axis of sensitivity oriented to sense crash acceleration in a direction substantially parallel to the vehicle's X-axis and provides a signal designated as RAS_2BX. Although the side satellite crash acceleration sensors 38 and 46 are described as being separate sensors, they may be combined in a single XY sensor.

The crash acceleration signals RAS_1BY, RAS_1BX, RAS_2BY, and RAS_2BX from the side satellite crash acceleration sensors 36, 40, 38 and 46, respectively, can take any of several forms. Each of the crash acceleration signals RAS_1BY, RAS_1BX, RAS_2BY, and RAS_2BX can have amplitude, frequency, pulse duration, and/or any other electrical characteristic that varies as a function of the sensed crash acceleration. In the embodiment of Figs. 1 and 2, the crash acceleration signals RAS_1BY and RAS_2BY have frequency and amplitude characteristics that vary as a function of the sensed crash acceleration, in a direction substantially parallel to the vehicle's Y-axis. The crash acceleration signals RAS_1BX and RAS_2BX have frequency and amplitude characteristics that vary as a function of the sensed crash acceleration in a direction substantially parallel to the vehicle's X-axis. Thus, each of the crash acceleration signals RAS_1BY, RAS_1BX, RAS_2BY, and RAS_2BX has an electrical characteristic that varies as a function of the sensed crash acceleration along the axis of sensitivity of the corresponding side satellite crash acceleration sensor 36, 40, 38 or 46, respectively. Side satellite crash acceleration sensors 36 and 38 are arranged to sense acceleration and provide positive crash acceleration values in opposite directions.

The apparatus 10 may include other Y-axis and X-axis side satellite crash acceleration sensors, Such other Y-axis and X-axis side satellite crash acceleration sensors may be mounted in or adjacent to C-pillars 52 and 54 on the driver side 18 and passenger side 22, respectively, of the vehicle 12 and/or in or adjacent to D-pillars 56 and 58 on the driver side 18 and passenger side 22, respectively, of the vehicle. If C-pillar and/or D-pillar side satellite crash acceleration sensors are used, their signals would be designated as RAS_C3Y and RAS_C3X (driver side C-pillar 52), RAS_C4Y and RAS_C4X (passenger side C-pillar 54), RAS_D5Y and RAS_D5X (driver side D-pillar 56), and RAS_D6Y and RAS_D6X (passenger side D-pillar 58), respectively. In the embodiment of the invention shown in Figs. 1 and 2, however, only side satellite crash acceleration sensors 36, 40, 38 and 46 are present.

Referring to Fig. 2, the apparatus 10 further includes a controller 70. The crash acceleration signals CCU_1X and CCU_1Y from the crash acceleration sensors 32 and 34, respectively, and the crash acceleration signals RAS_1BY and RAS_2BY from side satellite crash acceleration sensors 36 and 38, respectively, are provided to the controller 70. In accordance with one example embodiment of the present invention, the controller 70 may be a microcomputer programmed to execute a control process, including one or more algorithms. The functions performed by the controller 70 could, however, be carried out by other digital and/or analog circuitry, including separate electrical or electronic components, which could be assembled on one or more circuit boards using discrete circuitry or fabricated as an application specific integrated circuit ("ASIC").

In accordance with an example embodiment of the present invention, the controller 70 monitors the crash acceleration signals CCU_1X and CCU_1Y from the crash acceleration sensors 32 and 34, respectively, and the crash acceleration signals RAS_IBY and RAS_2BY from side satellite crash acceleration sensors 36 and 38, respectively. The controller 70 performs one or more crash determination algorithms to determine whether a vehicle crash condition exists. If the controller 70 determines that a vehicle crash event is occurring for which actuation or deployment of the actuatable occupant restraint system 14 or individual occupant restraint devices or other actuatable safety devices of the vehicle is desired, the devices will be actuated. The controller 70 has the ability to discriminate between a deployment crash event and a non-deployment crash event.

The crash determination algorithms performed by the controller 70 determine certain values from the crash acceleration signals CCU_IX, CCU_IY, RAS_1BY, and RAS_2BY. The deternimed values are used in determining whether a vehicle crash condition exists and whether the actuatable occupant restraint system 14 or individual occupant restraint devices or any other actuatable safety device of the vehicle should be deployed or actuated. If a determination is made, in accordance with the determined values, to deploy or actuate the actuatable occupant restraint system 14 or individual occupant restraint devices, such as the first frontal inflatable occupant restraint device 16 or the second frontal inflatable restraint device 20, or any Other actuatable safety device of the vehicle, the controller 70 outputs an appropriate deployment signal or command. Multi-stage devices may be actuated at different times depending on the determined values and the time of threshold crossings or different devices may be actuated at different times depending on the determined values and the times of threshold crossings.

The apparatus 10, in accordance with one example embodiment of the invention, uses only the crash acceleration signals CCU_IX, CCU_1Y, RAS_1BY and RAS_2BY in determining whether a vehicle crash condition exists and whether the actuatable occupant restraint system 14 or individual actuatable occupant restraint or safety devices of the vehicle should be deployed or actuated. The apparatus 10 may alternatively also employ the additional crash acceleration signals RAS_1BX and RAS_2BX from additional side satellite crash acceleration sensors 40 and 46, with or without filtering, in crash determination and/or deployment or actuation decisions. Other signals that may be received and employed in crash determination and/or deployment or actuation decisions, in addition to the crash acceleration signals CCU_1X, CCU_1Y, RAS_1BY, and RAS_2BY, are signals RAS_C3Y, RAS_C3X, RAS_C4Y, RAS_C4X, RAS_D5Y, RAS_D5X, RAS_D6Y, and RAS_D6X from optional C-pillar and/or D-pillar side satellite crash acceleration sensors if so desired to aid in detecting a specific type of collision event. Still other signals that may be received and employed in crash determination and/or deployment or actuation decisions are signals from a driver and/or passenger seat belt buckle switch sensor that provides a signal indicating whether the buckle is latched or unlatched, a driver and/or passenger weight sensor that provides a signal indicative of the seat occupant's sensed weight, and sensors that provide signals indicative of other vehicle occupant information, such as presence, position, height, girth, movement, and/or use of a child seat.

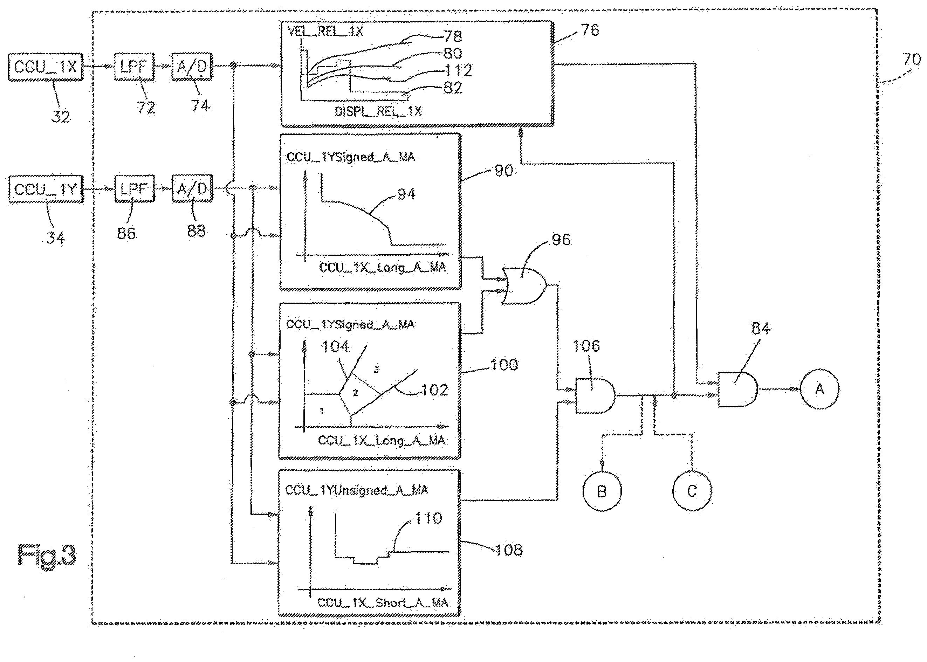

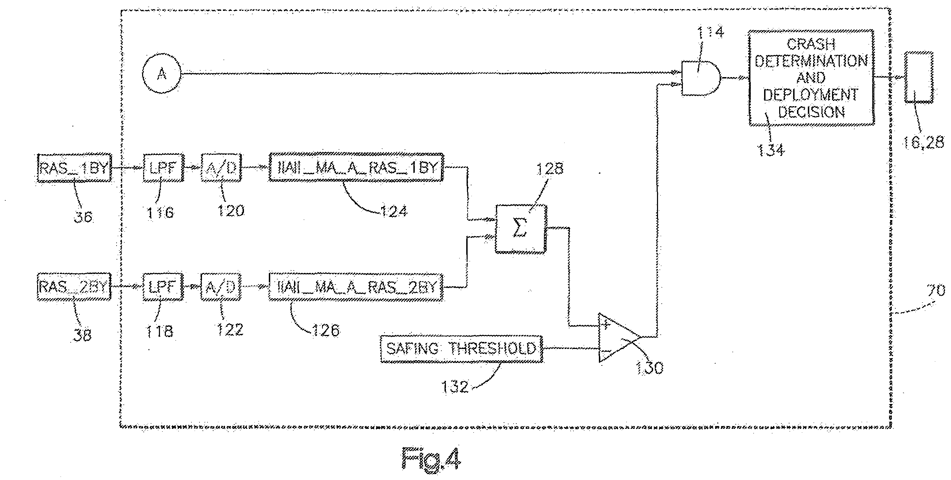

Referring to Figs. 3 and 4, the controller 70 determines whether a deployment vehicle crash condition exists and controls the actuatable occupant restraint system 14 using a control process and logic shown in accordance with one example embodiment of the present invention. The process and logic shown and described in Figs. 3 and 4 is specifically directed to controlling an actuatable occupant restraint device on the driver side 18 of the vehicle 12, such as the first frontal inflatable occupant restraint device 16. Nonetheless, this process and logic is representative of the process and logic that may be used to control any actuatable restraint of the vehicle 12, such as the second frontal inflatable occupant restraint device 20 on the passenger side 22 of the vehicle 12 or any other actuatable occupant restraint device that helps to protect a vehicle occupant in response to a crash condition of the vehicle 12. The control process and logic may also be used to control any actuatable safety device of the vehicle 12, such as vehicle door locks, a suspension control system, a deployable roll bar and/or an external air bag or other inflatable device external or internal to the vehicle.

In accordance with the example embodiment control process of Figs. 3 and 4, the crash acceleration sensor 32 provides an acceleration signal CCU_1X having a characteristic (e.g., frequency and amplitude) indicative of the vehicle's acceleration in a direction substantially parallel to the X-axis of the vehicle 12. The acceleration signal CCU_1X is provided to a low-pass-filfer ("LPF") function 72 of the controller 70. The LPF function 72 filters the acceleration signal CCU_1X to eliminate extraneous signal components, such as frequencies resulting from extraneous vehicle operating events and/or from road noise. The signal components removed through filtering are not useful in discriminating whether a vehicle crash event is occurring and whether a vehicle crash event is occurring for which deployment of a driver side actuatable occupant restraint device, such as the first frontal inflatable occupant restraint device 16, is desired. Empirical testing or calculation may be used to determine the signal components useful for discrimination of a vehicle crash condition in a vehicle of interest and/or determining whether a vehicle crash event is occurring for which deployment of a driver side actuatable occupant restraint device is desired. Signal components indicative of a vehicle crash condition and/or useful in determining whether a vehicle crash event is occurring for which deployment of a driver side actuatable occupant restraint device is desired are output for further processing.

The filtered output signal from the LPF function 72 is provided to an analog-to-digital ("A/D") converter function 74 of the controller 70. The A/D converter function 74 converts the filtered crash acceleration signal into a digital signal. The output of the A/D converter function 74 may be filtered with another filter function (not shown) having filter values determined for the purpose of eliminating small drifts and offsets associated with the A/D conversion. This other filter function may be digitally implemented within the controller 70. A determination and comparison function 76 of the controller 70 determines two crash metric values, VEL_REL_1X and PISPL_REL_1X, from the filtered crash acceleration signal CCU_1X. Specifically, the determination and comparison function 76 determines VEL_REL_1X, which is velocity in a direction substantially parallel to the X-axis, by integrating the filtered crash acceleration signal CCU_1X. The determination and comparison function 76 also determines DISP_REL_1X, which is displacement in a direction substantially parallel to the X-axis, by double integrating the filtered crash acceleration signal CCU_1X.

The crash displacement value and crash velocity value are preferably determined using a virtual crash sensing process fully described in U.S. Patent No. 6,186,539 to Foo et al. and U.S. Patent No. 6,036,225 to Foo et at using a spring mass model of the occupant to account for spring forces and damping forces. A detailed explanation of a spring-mass model is found in U.S. Patent 82 to Foo et at

The determination and comparison function 76 of the controller 70 compares the value VEL_REL_1X against at least one discrimination threshold, which comparison is used to discriminate whether a crash event is occurring. The discrimination threshold may be variable or may be fixed. In accordance with one example embodiment of the invention, the determination and comparison function 76 compares the VEL_REL_1X value as a function of the DISPL_REL_1X value against a first varying discrimination threshold 78 and a second varying discrimination threshold 80, Graphical repfesentations of the variations of the first and second thresholds 78 and 80, in accordance with one example embodiment of the invention, are included in Fig. 3. As can be seen, after an initial high plateau followed by a large step or drop, the first and second thresholds 78 and 80 generally increase with increasing displacement DISPL_REL_1X in a direction substantially parallel to the X-axis. Empirical testing or calculation may be used to determine the variation in the first and second thresholds 78 and 80 as a function of the displacement value DISPL_REL_1X needed to provide the desired actuation control. The occurrence of the VEL_REL_1X value exceeding the first threshold 78 or the second threshold 80, as determined by determination and comparison function 76, is time latched by a latch function (not shown) of controller 70, which provides a digital HIGH signal to an AND function 114 (Fig. 4) of the controller 70 for a predetermined time period. This portion of the example embodiment control process is not shown in Figs. 3 and 4, which instead illustrate the control process if this VEL_REL_1X value does not exceed either the first threshold 78 or the second threshold 80, as determined by determination and comparison function 76.

As part of comparing the VEL_REL_1X value as a function of the DISPL_REL_1X value against first and second varying thresholds 78 and 80, the determination and comparison function 76 ensures that the VEL_REL_1X value lies outside of a safing immunity box 82 before initiating any comparison. The purpose of the safing immunity box 82 is to filter misuse events and to prevent actuation of the occupant restraint devices when crash velocity and/or crash displacement values are within the sating immunity box values. Misuse events include hammer blows, road bumps, door slams, and other events, which produce output signals from the crash acceleration sensor 32 that are not the result of deployment crash events. The safing immunity box 82 is represented by values of determined crash velocity and crash displacement below which the actuatable occupant restraint system 14 cannot be actuated, It is only after the determined crash velocity VEL_REL_1X values and/or crash displacement DISPL_REL_1X values exceed the velocities and displacements represented by the safing immunity box 82 and are, therefore, outside of the safing immunity box 82 that actuation of the actuatable occupant restraint system 14 is normally permitted in response to crash metric determinations. Accordingly, the term "immunity" may, at times, be used herein when discussing threshold values that define whether or not an actuation of the actuatable occupant restraint system 14 is permitted.

The safing immunity box 82 defines an area bounded by predetermined upper limit values of VEL_REL_1X and DISPL_REL_1X. When the determined value of VEL_REL_1X is within the area of the safing immunity box 82, the safing function is OFF or at a digital LOW condition and, therefore, actuation of the actuatable occupant restraint system 14 cannot occur. If the value VEL_REL_1X is outside of the safing immunity box 82, the safing function is ON or at a digital HIGH condition and, therefore, the actuatable occupant restraint system 14 can be actuated. In accordance with the present invention, if the value VEL_REL_1X is outside the safing immunity box 82 and then enters or re-enters the safing immunity box, t the time period that the safing function is or remains ON is extended or enhanced after the value of VEL_REL_1X enters or reenters the safing immunity box, This is referred to as a latched time period. Also, even though only one safing immunity box 82 is shown in Fig. 3, each threshold 78 and 80 may have an associated safing immunity box,

Although Fig. 3 shows a single output from determination and comparison function 76, there are actually two outputs. A first output reflects the occurrence of the VEL_REL_1X value exceeding the first threshold 78. A second output reflects the occurrence of the VEL_REL_1X value exceeding the second threshold 80. The controller 70 distinguishes between the first and second outputs throughout the remaining steps of the control process. The first output is used to control the actuation of one vehicle occupant restraint device or other vehicle safety device, such as the first frontal inflatable occupant restraint device 16. The second output is used to control the actuation of another vehicle occupant restraint device of other vehicle safety device, such as a driver side seat belt pretensioner 28. If only a single threshold is desired for all actuatable occupant restraint devices or other vehicle safety devices, only one of the thresholds 78 and 80 may be employed in the control process of Figs. 3 and 4. Similarly, if more than two thresholds are desired to control more than two different occupant restraint devices or other safety devices in accordance with different thresholds, additional thresholds may be employed in the control process of Figs. 3 and 4.

Also in accordanee with the example embodment control process of Figs. 3 and 4, the crash acceleration sensor 34 provides an acceleration signal CCU_1Y having a characteristic (e.g., frequency and amplitude) indicative of the vehicle's crash acceleration in a direction substantially parallel to the Y-axis of the vehicle t2 upon the occurrence of a crash event. The acceleration signal CCU_1Y is provided to an LPF function 86 of the controller 70. The LPF function 86 filters the acceleration signal CCU_1Y to eliminate extraneous signal components, such as frequencies resulting from extraneous vehicle operating events and/or from road noise, The signal components removed through filtering are not useful in discriminating whether a vehicle crash condition exists and whether a vehicle crash event is occurring for which deployment of a driver side actuatable occupant restraint device, such as the first frontal inflatable occupant restraint device 16, is desired. Empirical testing or calculation may be used to determine the signal components useful for discrimination of a vehicle crash condition in a vehicle of interest and/or determinig whether a vehicle crash event is occurring for which deployment of a driver side actuatable occupant restraint device is desired. Signal components indicative of a vehicle crash condition and/or useful in determining whether a vehicle crash event is occurring for which deployment of a driver side actuatable occupant restraint device is desired are output for further processing,

The filtered output signal from the LPF fuction 86 is provided to an A/D converter function 88 of the controller 70. The A/D converter function 88 converts the filtered crash acceleration signal CCU_1Y into a digital signal. The ontput of the A/D converter function 88 may be filtered with another filter function (not shown) having filter values determined for the purpose of elimmating small drifts and offsets associated with the A/D conversion. This other filter function may be digitally implemented within the controller 70. The filtered crash acceleration signal CCU_1Y is provided to a determination and comparison function 90 of the controller 70, which determines a crash metric value CCU_1YSigned_A_MA from the filtered crash acceleration signal CCU_1Y and also determines a crash metric value CCU_1X_long_A_MA from the filtered crash acceleration signal CCU_1X.

The value CCU_1YSigned_A_MA is a moving average of acceleration as sensed by the second crash acceleration sensor 34. This value is determined by calculating moving average values of the associated filtered acceleration signal CCU_1Y from the second crash acceleration sensor 34. A moving average is the sum of the last predetermined number of samples of the filtered acceleration signal divided by the number of samples. The average is updated by removing the oldest sample, replacing it with the latest sample, and then determining the new average. As the average value changes or "moves" over time, it is referred to as a "moving average." Empirical testing or calculation may be used to determine the number of samples to be used for the value CCU_1YSigned_A_MA. The moving average values of the associated filtered acceleration signal CCU_1Y from the second crash acceleration sensor 34 are computed using "signed" values of the acceleration signal. Specifically, the direction of acceleration sensed by the second crash acceleration sensor 34 is reflected by providing a sign, i.e., plus or minus, for each value of the acceleration signal CCU_1Y. Those signs are considered in determining the crash metric value CCU_1YSigned_A_MA.

The value CCU_1X_Long_A_MA is a moving average of acceleration as sensed by the first crash acceleration sensor 32. This value is determined by calculating moving average values of the associated filtered acceleration signal CCU_1X from the first crash acceleration sensor 32. As previously explained, a moving average is the sum of the last predetermined number of samples of the filtered acceleration signal divided by the number of samples. The avenge is updated by removing the oldest sample, replacing it with the latest sample, and then determining the new average. As the average value changes or "moves" over time, it is referred to as a "moving average." Empirical testing or calculation may be used to determine the number of samples to be used for the value CCU_1X_Long_A_MA.

The determination and comparison function 90 of the controller 70 compares the value CCU_1YSigned_A_MA against a threshold. The threshold may be variable or may be fixed. Specifically, the determination and comparison function 90 compares the CCU_1YSigned_A_MA value as a function of the CCU_1X_Long_A_MA value against a varying threshold 94. A graphical representation of the variation of the threshold 94, in accordance with one example embodiment of the invention, is included in Fig. 3. As can be seen, after an initial high plateau followed by a large step or drop, the threshold 94 generally decreases with increasing CCU_1X_Long_A_MA values and ultimately becomes constant. Empirical testing or calculation may be used to determine the variation in the threshold 94 as a function of the CCU_1X_Long_A_MA value to produce the desired control effect for deployment of the occupant restraint device(s). The occurrence of the CCU_1YSigned_A_MA value exceeding the third threshold 94, as determined by determination and comparison function 90, is time latched by a latch function (not shown) of controller 70, which provides a digital HIGH signal to an OR function 96 of the controller for a predetermined time period.

The filtered crash acceleration signals CCU_1Y and CCU_1X from the A/D converter functions 88 and 74, respectively, are also provided to another determination and comparison function 100 of the controller 70. The determination and comparison function 100 determines the crash metric value CCU_1YSigned_A_MA from the filtered crash acceleration, signal CCU_1Y and determines the crash metric value CCU_1X_Long_A_MA from the filtered crash acceleration signal CCU_1X. Alternatively, the crash metric values CCU_1YSigned_A_MA and CCU_1X_Long_A_MA may be provided to the determination and comparison function 100 by the determination and comparison function 90.

The determination and comparison function 100 compares the value CCU_1YSigned_A_MA against different thresholds. The different thresholds may be variable or may be fixed. Specifically, the determination and comparison function 100 compares the CCU_1YSigned_A_MA value as a function of the CCU_1X_Long_A_MA value against a varying threshold 102 and a varying threshold 104. Graphical representations of the variations of the thresholds 102 and 104, in accordance with one example embodiment of the invention, are deputed in Fig. 3. As can be seen, the thresholds 102 and 104 generally increase with increasing CCU_1X_Long_A_MA values. Empirical testing or calculation may be used to determine the variations in the thresholds 102 and 104 as a function of the CCU_1X_Long_A_MA value to achieve a desired control function for deployment of the occupant restraint device(s).

If the CCU_1YSigned_A_MA value remains less than the threshold 104 and greater than the threshold 102 and also moves progressively through three stones (marked 1, 2 and 3 in Fig. 3) delineated between the thresholds 102 and 104, as determined by determination and comparison function 100, this occurrence is time latched by a latch function (not shown) of controller 70. This provides a digital HIGH signal to OR function 96 of the controller for a predetermined time period. When OR function 96 receives a digital HIGH either from the determination and comparison function 90 or from the determination and comparison function 100, via their respective time latch functions, the OR function is ON or HIGH and provides a digital HIGH signal to one input of an AND function 106.

The filtered crash acceleration signals CCU_1Y and CCU_1X from the A/D converter functions 88 and 74, respectively, are provided to a further determination and comparison function 108 of the controller 70. The determination and comparison function 108 determines a crash metric value CCU_1YUnsigned_A_MA from the filtered crash acceleration signal CCU_1Y and determines a crash metric value CCU_1X_Short_A_MA from the filtered crash acceleration signal CCU_1X.

The crash metric value CCU_1YUnsigned_A_MA is determined in the same manner as the value CCU_1YSigned_A_MA, except that the direction of acceleration sensed by the second crash acceleration sensor 34 is ignored for each value of the acceleration signal CCU_1Y. Thus, unsigned values of the acceleration signal CCU_1Y (i.e., their absolute values) are used in determining the crash metric value CCU_1YUnsigned_A_MA. Similarly, the crash metric value CCU_1X_Short_A_MA is determined in the same manner as the crash metric value CCU_1X_Long_A_MA, except that the predetermined number of samples of the filtered acceleration signal used to determine CCU_1X_Short_A_MA is smaller than the predetermined number of samples used to determine the value CCU_1X_Long_A_MA. Empirical testing or calculation may be used to determine the number of samples to be used for the value CUU_1YUnsigned_A_MA and for the value CCU_1X_Short_A_MA to provide the desired control of the occupant restraint device(s).

The determination. and comparison function 108 of the controller 70 compares the value CCU_1YUnsigned_A_MA against a threshold, The threshold may be variable or may be fixed. Specifically, the determination and comparisons function 108 compares the CCU_1YUnsigned_A_MA value as a function of the CCU_1X_Short_A_MA value against a varying threshold 110. A graphical representation of the variation of the threshold 110, in accordance with one example embodiment of the invention, is depicted in Fig. 3. As can be seen, after an initial high plateau followed by a large step or drop, the threshold 1 10 remains relatively flat, although it includes several small value steps, with increasing CCU_1X_Short_A_MA values. Empirical testing or calculation may be used to determine the variation in the threshold 110 as a function of the CCU_1X_Short_A_MA value to achieve the desired deployment control. The occurrence of the CCU_1YUnsigned_A_MA value exceeding the threshold 110, as determined by determination and comparison function 108, is time latched by a latch function (not shown) of controller 70. This provides a digital HIGH signal to AND function 106 of the controller for a predetermined time period.

When the AND function 106 receives digital HIGH signals from both the OR function 96 and the determination and comparison, function 108, via its associated time latch function, the AND function 106 is ON or HIGH and provides a digital HIGH signal to one input of AND function 84 and to determination and comparison function 76. In response to receiving a digital HIGH signal from AND function 106, determination and comparison function 76 switches thresholds used in its comparison function. Specifically, rather than comparing the VEL_REL_1X value as a function of the DISPL_REL_1X value against a first varying discrimination threshold 78 and a second varying discrimination threshold 80, the determination and comparison function 76 compares the VEL_REL_1X value against a single switched discrimination threshold 112. As shown by way of the example embodiment control arrangement in Fig. 3, switched threshold 112 increases slightly with increasing displacement DISPL_REL_1X in the same general manner as the first and second varying thresholds 78 and 80, but remains at lower values than the first and the second varying thresholds 78 and 80. Although a single switched threshold 112 is shown, in Fig. 3, if multiple thresholds are desired to control different occupant restraint devices or other safety devices, additional switched thresholds may be employed in the control process of Figs. 3 and 4.

The occurrence of the VEL_REL_1X value exceeding the switched threshold 112, as determined by determination and comparison function 76, is time latched by a latch function (not shown) of controller 70, which provides a digital HIGH signal to AND function 84 of the controller 70 for a predetermined time period. When AND function 84 receives a digital HIGH signal from AND function 106 and from the determination and comparison function 76, based οn a comparison of the VEL_REL_1X value as a function of the DISPL_REL_1X value against the switched threshold 112, the AND function 84 is ON or HIGH and provides a digital HIGH signal to one input of AND function 114 (Fig. 4).

Also in accordance with the example embodiment control process of Figs. 3 and 4, the side satellite crash acceleration sensor 36 provides an acceleration signal RAS_1BY having a characteristic (e.g., frequency and amplitude) indicative of the vehicle's acceleration in a direction substantially parallel to the Y-axis of the vehicle 12. The acceleration signal RAS_1BY is provided to an LPF function 116 of the controller 70. The LPF function 116 filters the acceleration signal RAS_1BY to eliminate extraneous signal components, such as frequencies resulting from extraneous vehicle operating events and/or from road noise. The signal components removed through filtering are not useful in discriminating whether a vehicle crash event is occurring and whether a vehicle crash event is occurring for which deployment of a driver side actuatable occupant restraint device, such as the first frontal inflatable occupant restraint device 16, is desired. Empirical testing or calculation may be used to determine the signal components useful for discrimination of a vehicle crash condition in a vehicle of interest and/or determining whether a vehicle crash event is occurring for which deployment of a driver side actuatable occupant restraint device is desired. Signal components indicative of a vehicle crash condition and/or useful in determining whether a vehicle crash event is occurring for which deployment of a driver side actuatable occupant restraint device is desired are output for further processing,

Further in accordance with the example embodiment control process of Figs. 3 and 4, the side satellite crash acceleration sensor 38 provides an acceleration signal RAS_2BY having a characteristic (e.g., frequency and amplitude) indicative of the vehicle's acceleration in a direction substantially parallel to the Y-axis of the vehicle 12. The acceleration signal RAS_2BY is provided to an LPF function 118 of the controller 70. The LPF fonction 118 filters the acceleration signal RAS_28Y to eliminate extraneous signal components, such as frequencies resulting from extraneous vehicle operating events and/or from road noise. The signal components removed through filtering are not useful in discriminating whether a vehicle crash event is occurring and whether a vehicle crash event is occurring for which deployment of a driver side actuatable occupant restraint device, such as the first frontal inflatable occupant restraint device 16, is desired. Empirical testing or calculation may be used to determine the signal components useful for discrimination of a vehicle crash condition in a vehicle of interest and/or determining whether a vehicle crash event is occurring for which deployment of a driver side actuatable occupant restraint device is desired. Signal components indicative of a vehicle crash condition and/or useful in determining whether a vehicle crash event is occurring for which deployment of a driver side actuatable occupant restraint device is desired are output for further processing.

The filtered output signals from the LPF functions 116 and 118 are provided to A/D converter functions 120 and 122, respectively, of the controller 70. The A/D converter functions 120 and 122 convert the filtered crash acceleration signals into digital signals. The outputs of the A/D converter functions 120 and 122 may be filtered with other filter functions (not shown) having filter values determined for the purpose of eliminating small drifts and offsets associated with the A/D conversion. These other filter functions may be digitally implemented within the controller 70. The filtered crash acceleration signals RAS_1BY and RAS_2BY are provided to two determination functions 124 and 126. Determination function 124 of the controller 70 determines a transverse crash metric value ∥A∥_MA_A_RAS_1BY from the filtered crash acceleration sigral RAS_1BY. Determination function 126 of the controller 70 determines a transverse crash metric value ∥A∥_MA_A_RAS_2BY from the filtered crash acceleration signal RAS_2BY.

The values ∥A∥_MA_A_RAS_1BY and ∥A∥_MA_A_RAS_2BY are moving averages of the absolute values of acceleration as sensed by the side satellite crash acceleration sensors 36 and 38, respectively. These values are determined by calculating moving averages of the absolute values of the associated filtered acceleration signals RAS_1BY and RAS_2BY from the side satellite crash acceleration sensors 36 and 38, respectively. As previously explained, a moving average is the sum of the last predetermined number of samples of the filtered acceleration signal divided by the number of samples. The average is updated by removing the oldest sample, replacing it with the latest sample, and then determining the new average. As the average value changes or "moves" over time, it is referred to as a "moving average." Empirical testing or calculation may be used to determine the number of samples to be used for each of the values ∥A∥_MA_A_RAS_1BY and ∥A∥_MA_A_RAS_2BY.

The values ∥A∥_MA_A_RAS_1BY and ∥A∥_MA_A_RAS_2BY are provided to a summing function 128 of the controller 70. The summing function 128 adds the values ∥A∥_MA_A_RAS_1BY and ∥A∥_MA_A_RAS_2BY to determine a transverse crash metric value that is a sum of the moving averages of the absolute values of acceleration as sensed by the side satellite crash acceleration sensors 36 and 38, A comparison function of the controller 70 compares the sum of the values ∥A∥_MA_A_RAS_1BY and ∥A∥_MA_A_RAS_2BY against a threshold, which may be fixed or may be variable. Specifically, a comparison function 130 compares the sum of the values ∥A∥_MA_A_RAS_1BY and ∥A∥_MA_A_RAS_2BY against a. safing threshold 132. Empirical testing or calculation may be used to determine the value of the safing threshold 132 for a vehicle of interest.

The occurrence of the sum of the values ∥A∥_MA_A_RAS_1BY and ∥A∥_MA_A_RAS_2BY exceeding the safing threshold 132, as determined by comparison function 130, is time latched by latch function (not shown) of controller 70, which provides a digital HIGH signal to AND function 114 of the controller for a predetermined time period. When the AND function 114 is ON or HIGH, as a result of receiving digital HIGH signals from both the comparison function 130, via its associated time latch function, and either the AND function 84 or, as previously described, the determination and comparison function 76, the AND function 114 provides a digital HIGH signal to a crash condition determination and deployment control function 134, which determines that a crash condition of the vehicle 12 is occurring. The crash condition determination and deployment control function 134 of the controller 70 also determines whether a vehicle crash event is occurring for which deployment or actuation of an actuatable occupant restraint device, such as the first frontal inflatable occupant restraint device 16 or the driver side seat belt pretensioner 28, or any other vehicle safety device is desired. If deployment is desired, the controller 70 outputs a deployment signal to the actuatable occupant restraint device, such as the first frontal inflatable occupant restraint device 16 and/or the driver side seat belt pretensioner 28, which deploys in response to the deployment signal. The deployment or actuation decision may be based solely on the determination that a vehicle crash condition is occurring or other inputs may be considered in making the deployment or actuation decision.

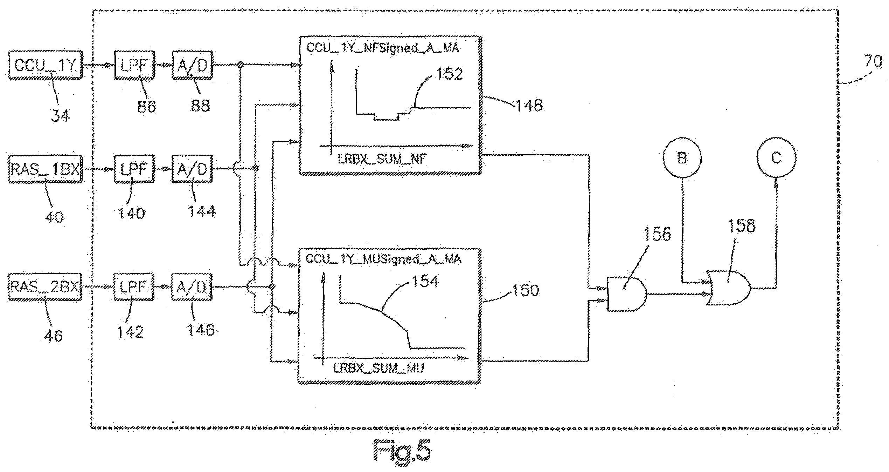

A second embodiment of the control process and logic used by the controller 70 to control the sctuatable occupant restraint system 14 is shown in Fig. 5. The process and logic of Fig. 5 is specifically directed to controlling an actuatable occupant restraint device on the driver side 18 of the vehicle 12, such as the first frontal inflatable occupant restraint device 16. Nonetheless, Fig. 5 is representative of a process and logic that may be used to control the second frontal inflatable occupant restraint device 20 on the passenger side 22 of the vehicle 12 and any other actuatable occupant restraint device that helps to protect a vehicle occupant in response to a crash condition of the vehicle 12. The control process and logic of Fig. 5 may also be used to control any actuatable safety device of the vehicle 12, such as vehicle door locks, a suspension control system, a deployable roll bar and/or an external air bag of other inflatable device external or internal to the vehicle.

In the control process of Fig. 5, the first crash acceleration sensor 32 provides an acceleration signed CCU_1X to the controller 70, and the second crash acceleration sensor 34 provides an acceleration signal CCU_1Y to the controller, just as in the control process of Figs. 3 and 4. The controller 70 processes the signals CCU_1X and CCU_1Y in the same manner and with the same functions as in the control process of Figs. 3 and 4 through and including the AND function 106 of the controller. The control process of Fig. 5 differs, however, froms the control process of Figs. 3 and 4 in that acceleration signals RAS_1BX and RAS_2BX from the side satellite crash acceleration sensors 40 and 46, respectively, are used in the control process of Fig. 5, as explained below. Because the control process and logic of Fig. 5 is identical in many respects to the control process and logic of Figs. 3 and 4, Fig. 5 illustrates only the part of the second embodiment of the control process and logic used by the controller 70 that differs from the control process of Figs. 3 and 4. The part of the control process shown in Fig. 5 interfaces with the control process shown in Figs. 3 and 4 at points B and C of Fig. 3, just after AND function 106 and before AND function 84.

In accordance with the example embodiment control process of Fig. 5, the side satellite crash acceleration sensor 40 provides an acceleration signal RAS_1BX having a characteristic (e.g., frequency and amplitude) indicative of the vehicle's acceleration in a direction subststially parallel to the X-axis of the vehicle 12. The acceleration signal RAS_1BX is provided to an LPF function 140 of the controller 70. The LPF function 140 filters the acceleration signal RAS_1BX to eliminate extraneous signal components, such as frequencies resulting from extraneous vehicle operating events and/or from road noise. The signal components removed through filtering are not useful in discriminating whether a vehicle crash event is occurring and whether a vehicle crash event is occurring for which deployment of a driver side actuatable occupant restraint device, such as the first frontal inflatable occupant restraint device 16, is desired. Empirical testing or calculation may be used to determine the signal components useful for discrimination of a vehicle crash condition in a vehicle of interest and/or determining whether a vehicle crash event is occurring for which deployment of a driver side actuatable occupant restraint device is desired. Signal components indicative of a vehicle crash condition and/or useful in determining whether a vehicle crash event is occurring for which deployment of a driver side actuatable occupant restraint device is desired are output for further processing.

Also in accordance with the example embodiment control process of Fig. 5, the side satellite crash acceleration sensor 46 provides an acceleration signal RAS_2BX having a characteristic (e.g., frequency and amplitude) indicative of the vehicle's acceleration in a direction substanually parallel to the X-axis of the vehicle 12. The acceleration signal RAS_2BX is provided to an LPF function 142 of the controller 70. The LPF function 142 filters the acceleration signal RAS_2BX to eliminate extraneous signal components, such as frequencies resulting front extraneous vehicle operating events and/or from road noise. The signal components removed through filtering are not useful in discriminating whether a vehicle crash event is occurring and whether a vehicle crash event is occurring for which deployment of a driver side actuatable occupant restraint device, such as the first frontal infiatable occupant restraint device 16, is desired. Empirical testing or calculation may be used to determine the signal components useful for discrimination of a vehicle crash condition in a vehicle of interest and/or determining whether a vehicle crash event is occurring for which deployment of a driver side actuatable occupant restraint device is desired. Signal components indicative of a vehicle crash condition and/or useful in determining whether a vehicle crash event is occurring for which deployment of a driver side actuatable occupant restraint device is desired are output for further processing.

The filtered output signals from the LPF functions 140 and 142 are provided to A/D converter functions 144 and 146, respectively, of the controller 70. The A/D converter functions 144 and 146 convert the filtered crash acceleration signals into digital signals. The outputs of the A/D converter functions 144 and 146 be filtered with other filter functions (not shown) having filter values determined for the purpose of eliminating small drifts and offsets associated with the A/D conversion. These other filter functions may be digitally implemented within the controller 70.

The filtered crash acceleration signals RAS_1BX and RAS_2BX, as well as the filtered crash, acceleration, signal CCU_1Y from the A/D converter function 88, are provided to two determination and discrimination functions 148 and 150. Determination and comparison function 148 of the controller 70 determines a crash metric value CCU_1Y_NFSigned_A_MA from the filtered crash acceleration signal CCU_1Y and determines a crash metric value LRBX_SUM_NF from the filtered crash acceleration signals RAS_1BX and RAS_28X. Determination and comparison function 150 of the controller 70 determines a crash metric value CCU_MUSigned_A_MA from the filtered crash acceleration signal CCU_1Y and determines a crash metric value LRBX_SUM_MU from the filtered crash acceleration signals RAS_1BX and RAS_2BX.

The crash metric values CCU_1Y_NFSigned_A_MA and CCU_1Y_MUSigned_A_MA are determined in the same manner as the crash metric value CCU_1YSigned_A_MA, except for the predetermined number of samples of the filtered acceleration signal CCU_1Y used. Specifically, the predetermined numbers of samples used to determine the value CCU_1Y_NFSigned_A_MA and the value CCU_1Y_MUSigned_A_MA may be different from the number used to determine the value CCU_1YSigned_A_MA. In addition, the predetermined number of samples of the filtered acceleration signal CCU_1Y used to determine the value CCU_1Y_NFSigned_A_MA may be different from the number used to determine the value CCU_1Y_MUSigned_A _MA. Empirical testing or calculation may be used to determine the number of samples to be used for the value CCU_1Y_NFSigned_A_MA and for the value CCU_1V_MUSigned_A_MA.

The values LRBX_SUM_NF and LRBX_SUM_MU are the sums of moving averages of acceleration as sensed by the side satellite crash acceleration sensors 40 and 46. These values are determined by calculating moving average values of the associated filtered acceleration signals RAS_1BX and RAS_2BX from the side satellite crash acceleration sensors 40 and 46 and adding together the determined moving average values. As previously explained a moving average is the sum of the last predetermined number of samples of the filtered acceleration signal divided by the number of samples. The average is updated by removing the oldest sample, replacing it with the latest sample, and then determining the new average. As the average value changes or "moves" over time, it is referred to as a "moving average." Empirical testing calculation be used to determine the number of samples to be used for the values LRMBX_SUM_NF and LRBX_SUM_MU. The predetermined number of samples of the filtered acceleration filtered acceleration signals RAS_1BX and RAS_2BX used to determine the value LRBX_SUM_NF may be different from the number used to determine the value LRBX_SUM_MU.

The determination and comparison function 148 of the controller 70 compares the value CCU_1Y_NFSigned_A_MA against a threshold. The threshold may be variable or may be fixed. Specifically, the determination and comparison function 148 compares the CCU_1Y_NFSigned_A_MA value as a function of the LRBX_SUM_NF value against a varying threshold 152. A graphical represematioa of the variation of the threshold 152, in accordance with one example embodiment of the present invention, is depicted in Fig. 5. As can be seen, after an initial high plateau followed by a large step or drop, the threshold 152 remains relatively flat, although it includes several small value steps, with increasing LRBX_SUM_NF values. Empirical testing or calculation may be used to determine the variation in the threshold 152 as a function of the LRBX_SUM_NF value to provide the desired control of the restraint device(s). The occurrence of the CCU_1Y_NFSigned_A_MA value exceeding the threshold 152, as determined by determination and comparison function 148, is time latched by a latch function (not shown) of controller 70. This provides a digital HIGH signal to AND function 156 of the controller for a predetermined time period.

The determination and comparison function 150 of the controller 70 compares the value CCU_1Y_MUSigned_A_MA against a threshold. The threshold may be variable or may be fixed. Specifically, the determination and comparison function 150 compares the CCU_1Y_MUSigned_A_MA value as a function of the LRBX_SUM_MU value against a threshold 154. A graphical representation of the variation of the threshold 154, in accordance with one example embodiment of the present invention, is depicted in Fig. 5. As can be seen, after an initial high plateau followed by a large step or drop, the threshold 154 generally decreases with increasing LRBX_SUM_MU values and ultimately becomes constant. Empirical testing or calculation may be used to determine the variation in the threshold 154 as a functions of the LRBX_SUM_MU value to provide the desired control of the restraint device(s). The occurence of the CCU_1Y_MUSigned_A_MA value exceeding the threshold 154, as determined by determination and comparison function 150, is time latched by a latch function (not shown) of controller 70. This provides a digital HIGH signal to AND function 156 of the controller for a predetermined time period.

When the AND function 156 receives digital HIGH signals from both the determination and comparison function 148 and the determination and comparison function 150, via their associated time latch functions, the AND function 156 is ON or HIGH and provides a digital HIGH signal to OR function 158. When OR function 158 receives a digital HIGH from either the AND function 106 (Fig. 3) or the AND function 156, the OR function is ON or HIGH and provides a digital HIGH signal to AND function 84 (Fig. 3) and to determination and comparison function 76. In response to receiving a digital HIGH signal from OR function 158, determination and comparison function 76 switches thresholds. Specifically, rather than comparing the VEL_REL_1X value as a function of the DISPL_REL_1X value against a first varying discrimination threshold 78and a second varying discrimination threshold 80, the determination and comparison function 76 compares the VEL_REL_1X value against a single switched discrimination threshold 112. As shown by way of the example embodiment control arrangement in Fig. 3, switched threshold 112 increases slightly with increasing displacement DISPL_REL_1X in the same general manner as the first and second varying thresholds 78 and 80, but remains at lower values than the first and second varying thresholds 78 and 80.

## Claims

1. A method for determining a crash condition of a vehicle (12) comprising the steps of:
sensing crash acceleration in a first direction substantially parallel to a front- to-rear axis (X) of the vehicle (12) at a substantially central vehicle location and providing a first acceleration signal (CCU_1X) indicative thereof;
sensing crash acceleration in a second direction substantially parallel to a side-to-side axis (Y) of the vehicle (12) and providing a second acceleration signal (CCU_1Y) indicative thereof;
sensing crash acceleration in the first direction at two locations remote from the substantially central vehicle location and near opposite sides of the vehicle (12) and providing acceleration signals (RAS_1BX; RAS_2BX) indicative thereof;
determining a transverse crash evaluation value (CCU_1Y_NFSigned_A_MA) functionally related to the second acceleration signal (CCU_1Y);
determining remote crash evaluation values (LRBX_SUM_NF; LRBX_SUM_MU) functionally related to a sum of the the acceleration signals (RAS_1BX; RAS_2BX) at the remote locations;
comparing the determined transverse crash evaluation value (CCU_1Y_NFSigned_A_MA) as a function of the determined remote crash evaluation values (LRBX_SUM_NF; LRBX_SUM_MU) against an associated threshold (152, 154); and
determining a crash condition (134) of the vehicle (12) in response to (a) the comparison and (b) the first acceleration signal (CCU_1X).

2. The method of claim 1 further comprising the step of providing an actuation signal for actuating an actuatable safety device (14, 16, 20, 24, 26, 28, 29) of the vehicle (12) in response to determining a crash condition (134) of the vehicle (12).

3. The method of claim 1 wherein said step of determining a transverse crash evaluation value (CCU_1Y_NFSigned_A_MA) functionally related to the sensed second acceleration signal (CCU_1Y) includes the steps of:
determining a moving average (∥A∥_MA_A_RAS_1BY; ∥A∥_MA_A_RAS_2BY) of acceleration in the second direction based on the second acceleration signal (CCU_1Y), and
determining the transverse crash evaluation value (CCU_1Y_NFSigned_A_MA) based on the determined moving average ∥A∥_MA_A_RAS_1BY; ∥A∥_MA_A_RAS_2BY) of acceleration in the second direction.

4. The method of claim 3 wherein said step of determining remote crash evaluation values (LRBX_SUM_NF; LRBX_SUM_MU) functionally related to the acceleration signals (RAS_1BX; RAS_2BX) at the remote locations includes the step of determining a sum of moving averages of acceleration in said first direction at the remote locations, and
wherein said step of comparing the determined transverse crash evaluation value (CCU_1Y_NFSigned_A_MA) against associated thresholds (152, 154) includes the step of comparing said moving average (∥A∥_MA_A_RAS_1BY; ∥A∥_MA_A_RAS_2BY) of acceleration in the second direction as a function of the sum of the moving averages of acceleration in said first direction at the remote locations against the associated thresholds (152, 154).

5. The method of claim 3 wherein said step of determining a moving average (∥A∥_MA_A_RAS_1BY; ∥A∥_MA_A_RAS_2BY) of acceleration in said second direction based on the second acceleration signal (CCU_1Y) includes the step of determining a moving average (∥A∥_MA_A_RAS_1BY; ∥A∥_MA_A_RAS_2BY) of acceleration in said second direction based on signed values of the second acceleration signal (CCU_1Y).

6. The method of claim 1 further comprising the steps of:
determining crash velocity (VEL_REL_1X) in said first direction from the first acceleration signal (CCU_1X);
determining crash displacement (DISP_REL_1X) in said first direction from the first acceleration signal (CCU_1X);
comparing (76) the determined crash velocity (VEL_REL_1X) as a function of the determined crash displacement (DISP_REL_1X) against one of a discrimination threshold (78, 80) and a switched discrimination threshold (112); and
switching the discrimination threshold (78, 80) to the switched discrimination threshold (112) when the determined crash metric value as a function of the sensed first acceleration signal (CCU_1X) exceeds the associated threshold; and
wherein said step of determining a crash condition of the vehicle (12) includes the step of determining a crash condition of the vehicle (12) in response to the determined crash velocity (VEL_REL_1X) as a function of the determined crash displacement (DISP_REL_1X) exceeding one of the discrimination threshold (78, 80) and the switched discrimination threshold (112) and the determined transverse crash evaluation value (CCU_1Y_NFSigned_A_MA) as a function of the determined remote crash evaluation values (LRBX_SUM_NF; LRBX_SUM_MU) exceeding the associated thresholds (152, 154).

7. A method for determining a crash condition of a vehicle (12), comprising the steps of:
sensing crash acceleration in a first direction substantially parallel to a front-to-rear axis (X) of the vehicle (12) at a substantially central vehicle location and providing a front-to- rear central acceleration signal (CCU_1X) indicative thereof;
sensing crash acceleration in a second direction substantially parallel to a side- to-side axis (Y) of the vehicle (12) at a substantially central location and providing a side-to-side central acceleration signal (CCU_1Y) indicative thereof;
sensing crash acceleration in the first direction at two locations remote from the substantially central vehicle location and near opposite sides of the vehicle (12) and providing front-to-rear remote acceleration signals (RAS_1BX; RAS_2BX) indicative thereof;
sensing crash acceleration in the second direction near opposite sides of the vehicle (12) and providing side-to-side remote acceleration signals (RAS_1BY; RAS_2BY) indicative thereof;
determining a side-to-side crash evaluation value (CCU_1Y_NFSigned_A_MA) functionally related to the side-to-side central acceleration signal (CCU_1Y);
determining front-to-rear remote crash evaluation values (LRBX_SUM_NF; LRBX_SUM_MU) functionally related to the front-to-rear remote acceleration signals (RAS_1BX; RAS_2BX);
determining side-to-side remote crash evaluation values functionally related to the side-to-side remote acceleration signals (RAS_1BY; RAS_2BY);
comparing the determined side-to-side central crash evaluation value (CCU_1Y_NFSigned_A_MA) as a function of the determined front-to-rear remote crash evaluation values (LRBX_SUM_NF; LRBX_SUM_MU) against an associated threshold (152, 154);
comparing the determined side-to-side remote crash evaluation values against an associated safing threshold (132);
comparing the determined side-to-side central crash evaluation value (CCU_1Y_NFSigned_A_MA) as a function of the value of the front-to-rear central acceleration signal (CCU_1X) against an associated threshold; and
determining a crash condition (134) of the vehicle (12) in response to the comparisons and the front-to-rear central acceleration signal (CCU_1X).

8. An apparatus (10) for determining a crash condition of a vehicle (12), said apparatus (10) comprising:
a first accelerometer (32) for sensing crash acceleration in a first direction substantially parallel to a front-to-rear axis (X) of the vehicle (12) at a substantially central vehicle location and providing a first acceleration signal (CCU_1X) indicative thereof;
a second accelerometer (36) for sensing crash acceleration in a second direction substantially parallel to a side-to-side axis (Y) of the vehicle (12) and providing a second acceleration signal (CCU_1Y) indicative thereof; third accelerometers (40, 46) for sensing crash acceleration in the first direction at two locations remote from the substantially central vehicle location and near opposite sides of the vehicle (12) and providing acceleration signals (RAS_1BX; RAS_2BX) indicative thereof; and
a controller (70) for determining a transverse crash evaluation value (CCU_1Y_NFSigned_A_MA) functionally related to the second acceleration signal (CCU_1Y) and determining remote crash evaluation values (LRBX_SUM_NF; LRBX_SUM_MU) functionally related to a sum of the acceleration signals (RAS_1BX; RAS_2BX) at the remote locations, the controller (70) also comparing the determined transverse crash evaluation value (CCU_1Y_NFSigned_A_MA) as a function of the determined remote crash evaluation values (LRBX_SUM_NF; LRBX_SUM_MU) against associated thresholds (152, 154), the controller (70) further determining a crash condition (134) of the vehicle (12) in response to (a) the comparison and (b) the first acceleration signal (CCU_1X).

9. The apparatus of claim 8 wherein said controller (70) also provides an actuation signal for actuating an actuatable safety device (14, 16, 20, 24, 28, 29) of the vehicle (12) in response to determining a crash condition (134) of the vehicle (12).

10. The apparatus of claim 8 wherein said controller (70) determines the transverse crash evaluation value (CCU_1Y_NFSigned_A_MA) as a moving average (∥A∥_MA_A_RAS_1BY; ∥A∥_MA_A_RAS_2BY) of acceleration in the second direction as a function of the determined remote crash evaluation values (LRBX_SUM_NF; LRBX_SUM_MU).

11. The apparatus of claim 8 wherein said controller (70) determines the remote crash evaluation values (LRBX_SUM_NF; LRBX_SUM_MU) as a sum of moving averages of acceleration in said first direction at the remote locations.

12. The apparatus of claim 8 wherein the controller (70) further determines a crash velocity (VEL_REL_1X) and a crash displacement (DISP_REL_1X) from the first acceleration signal (CCU_1X) and compares the determined crash velocity (VEL_REL_1X) as a function of the determined crash displacement (DISP_REL_1X) against one of a discrimination threshold (78, 80) and a switched discrimination threshold (112), the controller (70) determining a crash condition (134) of the vehicle (12) in response to both (a) the determined crash velocity (VEL_REL_1X) as a function of the determined crash displacement (DISP_REL_1X) exceeding one of the discrimination threshold (78, 80) and the switched discrimination threshold (112) and (b) the determined transverse crash evaluation value (CCU_1Y_NFSigned_A_MA) as a function of the determined remote crash evaluation values (LRBX_SUM_NF; LRBX_SUM_MU) exceeding the associated thresholds (152, 154).

13. The apparatus of claim 12 wherein at least one of the discrimination and associated thresholds (78, 80, 112, 152, 154) is a variable threshold.

14. The apparatus of claim 12 wherein at least one of the discrimination and associated thresholds (78, 80, 112, 152, 154) is a fixed threshold.

15. The apparatus of claim 8 wherein the second accelerometer (32) is located at a substantially central vehicle location.

## Patentansprüche

1. Verfahren zur Bestimmung eines Zusammenstoßzustands eines Fahrzeugs (12), das die folgenden Schritte aufweist:
Abfühlen einer Zusammenstoßbeschleunigung in einer ersten Richtung, die parallel zu einer Vor-Rück-Achse (X) des Fahrzeugs (12) bei einer im Wesentlichen zentralen Fahrzeugposition und Vorsehen eines ersten Beschleunigungssignals (CCU_1X), das eine Anzeige für diese bildet;
Abfühlen einer Zusammenstoßbeschleunigung in einer zweiten Richtung, die im Wesentlichen parallel zu einer Seite-zu-Seiten-Achsen (Y) des Fahrzeugs (12) ist und Vorsehen eines zweiten Beschleunigungssignals (CCU_1Y), das eine Anzeige für diese bildet;
Abfühlen einer Zusammenstoßbeschleunigung in der ersten Richtung bei zwei Positionen entfernt von der im Wesentlichen zentralen Fahrzeugposition und nahe gegenüberliegenden Seiten des Fahrzeugs (12) und Vorsehen von Beschleunigungssignalen (RAS_1BX; RAS_2BX), die Anzeigen für diese bilden;
Bestimmen eines Querzusammenstoßbewertungswerts (CCU_1Y_NFSigned_A_MA), der funktional in Beziehung zu dem zweiten Beschleunigungssignal (CCU_1Y) steht;
Bestimmen von Fernzusammenstoßbewertungswerten (LRBX_SUM_NF; LRBX_SUM_MU), die funktional in Beziehung zu einer Summe der Beschleunigungssignale (RAS_1BX; RAS_2BX) bei entfernten Positionen stehen;
Vergleichen des bestimmten Querzusammenstoßbewertungswerts (CCU_1Y_NFSigned_A_MA) als eine Funktion der bestimmten Fernzusammenstoßbewertungswerte (LRBX_SUM_NF; LRBX_SUM_MU) mit einem assoziierten Schwellenwert (152, 154); und
Bestimmen eines Zusammenstoßzustands (134) des Fahrzeugs (12) ansprechend auf (a) den Vergleich und (b) das erste Beschleunigungssignal (CCU_1X).

2. Verfahren gemäß Anspruch 1, das ferner den Schritt des Vorsehens eines Betätigungssignals zur Betätigung einer betätigbaren Sicherheitseinrichtung (14, 16, 20, 24, 26, 28, 29) des Fahrzeugs (12) ansprechend auf die Bestimmung eines Zusammenstoßzustands (134) des Fahrzeugs (12) aufweist.

3. Verfahren gemäß Anspruch 1, wobei der Schritt des Bestimmens eines Querzusammenstoßbewertungswerts (CCU_1Y_NFSigned_A_MA) in funktionaler Beziehung zu dem abgefühlten, zweiten Beschleunigungssignal (CCU_1Y) steht, das die folgenden Schritte aufweist:
Bestimmen eines gleitenden Durchschnitts (∥A∥_MA_A_RAS_1BY; ∥A∥_MA_A_RAS_2BY) der Beschleunigung in der zweiten Richtung basierend auf dem zweiten Beschleunigungssignal (CCU_1Y), und
Bestimmen des Querzusammenstoßbewertungswerts (CCU_1Y_NFSigned_A_MA) basierend auf dem bestimmten, gleitenden Durchschnitt (∥A∥_MA_A_RAS_1BY; ∥A∥_MA_A_RAS_2BY) der Beschleunigung in der zweiten Richtung.

4. Verfahren gemäß Anspruch 3, wobei der Schritt des Bestimmens von Fernzusammenstoßbewertungswerten (LRBX_SUM_NF; LRBX_SUM_MU), der in funktionaler Beziehung zu den Beschleunigungssignalen (RAS_1BX; RAS_2BX) bei den entfernten Positionen steht, den Schritt des Bestimmens einer Summe von gleitenden Durchschnitten der Beschleunigung in der ersten Richtung bei den entfernten Positionen aufweist, und
wobei der Schritt des Vergleichens der bestimmten Querzusammenstoßbewertungswerte (CCU_1Y_NFSigned_A_MA) mit assoziierten Schwellenwerten (152, 154) den Schritt des Vergleichens der gleitenden Durchschnitte (∥A∥_MA_A_RAS_1BY; ∥A∥_MA_A_RAS_2BY) der Beschleunigung in der zweiten Richtung als eine Funktion der Summe der gleitenden Durchschnitte der Beschleunigung in der ersten Richtung bei den entfernten Positionen mit den assoziierten Schwellenwerten (152, 154) aufweist.

5. Verfahren gemäß Anspruch 3, wobei der Schritt des Bestimmens eines gleitenden Durchschnitts (∥A∥_MA_A_RAS_1BY; ∥A∥_MA_A_RAS_2BY) der Beschleunigung in der zweiten Richtung basierend auf dem zweiten Beschleunigungssignal (CCU_1Y) den Schritt des Bestimmens eines gleitenden Durchschnitts (∥A∥_MA_A_RAS_1BY; ∥A∥_MA_A_RAS_2BY) der Beschleunigung in der zweiten Richtung basierend auf mit Vorzeichen versehenen Werten des zweiten Beschleunigungssignals (CCU_1Y) aufweist.

6. Verfahren gemäß Anspruch 1, das die folgenden Schritte aufweist:
Bestimmen einer Zusammenstoßgeschwindigkeit (VEL_REL_1X) in der ersten Richtung aus dem ersten Beschleunigungssignal (CCU_1X);
Bestimmen des Zusammenstoßversatzes (DISP_REL1X) in der ersten Richtung aus dem ersten Beschleunigungssignal (CCU_1X);
Vergleichen (76) der bestimmten Zusammenstoßgeschwindigkeit (VEL_REL_1X) als eine Funktion des bestimmten Zusammenstoßversatzes (DISP_REL_1X) mit einem Diskriminierungsschwellenwert (78, 80) und einem geschalteten Diskriminierungsschwellenwert (112); und
Umschalten des Diskriminierungsschwellenwerts (78, 80) zu dem umgeschalteten Diskriminierungsschwellenwert (112), wenn der bestimmte Zusammenstoßmetrikwert als eine Funktion des abgefühlten ersten Beschleunigungssignals (CCU_1X) den assoziierten Schwellenwert übersteigt; und
wobei der Schritt des Bestimmens eines Zusammenstoßzustands des Fahrzeugs (12) den Schritt des Bestimmens eines Zusammenstoßzustands des Fahrzeugs (12) aufweist, und zwar ansprechend darauf, dass die bestimmte Zusammenstoßgeschwindigkeit (VEL_REL_1X) als eine Funktion des bestimmten Zusammenstoßversatzes (DISP_REL_1X) entweder den Diskriminierungsschwellenwert (78, 80) oder den umgeschalteten Diskriminierungsschwellenwert (112) übersteigt und der bestimmte Querzusammenstoßbewertungswert (CCU_1Y_NFSigned_A_MA) als eine Funktion des bestimmten Fernzusammenstoßbewertungswerts (LRBX_SUM_NF; LRBX_SUM_MU) die assoziierten Schwellenwerte (152, 154) übersteigt.

7. Verfahren zur Bestimmung eines Zusammenstoßzustands eines Fahrzeugs (12), das die folgenden Schritte aufweist:
Abfühlen einer Zusammenstoßbeschleunigung in einer ersten Richtung, die im Wesentlichen parallel zu der Vor-Rück-Achse (X) des Fahrzeugs (12) ist, bei einer im Wesentlichen zentralen Fahrzeugposition und Vorsehen eines Vor-Rück-Zentralbeschleunigungssignals (CCU_1X), das eine Anzeige für diese bildet;
Abfühlen einer Zusammenstoßbeschleunigung in einer zweiten Richtung, die im Wesentlichen parallel zu einer Seite-zu-Seiten-Achse (Y) des Fahrzeugs (12) bei einer im Wesentlichen zentralen Position ist, und Vorsehen eines Seite-zu-Seiten-Zentralbeschleunigungssignals (CCU_1Y), das eine Anzeige für diese bildet;
Abfühlen einer Zusammenstoßbeschleunigung in der ersten Richtung bei zwei Positionen entfernt von der im Wesentlichen zentralen Fahrzeugposition und nahe gegenüberliegenden Seiten des Fahrzeugs (12) und Vorsehen von Vor-Rück-Fernbeschleunigungssignalen (RAS_1BX; RAS_2BX), die eine Anzeige für diese bilden;
Abfühlen einer Zusammenstoßbeschleunigung in der zweiten Richtung nahe gegenüberliegenden Seiten des Fahrzeugs (12) und Vorsehen von Seite-zu-Seiten-Fernbeschleunigungssignalen (RAS_1BY; RAS_2BY), die eine Anzeige für diese bilden;
Bestimmen eines Seite-zu-Seiten-Zusammenstoßbewertungswerts (CCU_1Y_NFSigned_A_MA), der funktional in Beziehung zu dem Seite-zu-Seiten-Zentralbeschleunigungssignal (CCU_1Y) steht;
Bestimmen der Vor-Rück-Fernzusammenstoßbewertungswerte (LRBX_SUM_NF; LRBX_SUM_MU), die funktional in Beziehung zu den Vor-Rück-Fernbeschleunigungssignalen (RAS_1BX; RAS_2BX) stehen;
Bestimmen der Seite-zu-Seiten-Fernzusammenstoßbewertungswerte, die funktional in Beziehung zu den Seite-zu-Seiten-Fernbeschleunigungssignalen (RAS_1BY; RAS_2BY) stehen;
Vergleichen des bestimmten Seite-zu-Seiten-Zentralzusammenstoßbewertungswerts (CCU_1Y_NFSigned_A_MA) als eine Funktion der bestimmten Vor-Rück-Fernzusammenstoßbewertungswerte (LRBX_SUM_NF; LRBX_SUM_MU) mit einem assoziierten Schwellenwert (152, 154);
Vergleichen der bestimmten Seite-zu-Seiten-Fernzusammenstoßbewertungswerte mit einem assoziierten Schutz- bzw. Absicherungsschwellenwert (132);
Vergleichen des bestimmten Seite-zu-Seiten-Zentralzusammenstoßbewertungswerts (CCU_1Y_NFSigned_A_MA) als eine Funktion des Werts des Vor-Rück-Zentralbeschleunigungssignals (CCU_1X) mit einem assoziierten Schwellenwert; und
Bestimmen eines Zusammenstoßzustands (134) des Fahrzeugs (12) ansprechend auf die Vergleiche und das Vor-Rück-Zentralbeschleunigungssignal (CCU_1X).

8. Verfahren (10) zur Bestimmung eines Zusammenstoßzustands eines Fahrzeugs (12), wobei die Vorrichtung (10) Folgendes aufweist:
einen ersten Beschleunigungsmesser (32) zum Abfühlen einer Zusammenstoßbeschleunigung in einer ersten Richtung, die im Wesentlichen parallel zu einer Vor-Rück-Achse (X) des Fahrzeugs (12) bei einer im Wesentlichen zentralen Fahrzeugposition ist, und Vorsehen eines ersten Beschleunigungssignals (CCU_1X), das eine Anzeige dafür bildet;
einen zweiten Beschleunigungsmesser (36) zum Abfühlen einer Zusammenstoßbeschleunigung in einer zweiten Richtung im Wesentlichen parallel zu einer Seite-zu-Seiten-Achse (Y) des Fahrzeugs (12) und Vorsehen eines zweiten Beschleunigungssignals (CCU_1Y), das eine Anzeige für diese bildet;
dritte Beschleunigungsmesser (40, 46), zum Abfühlen der Zusammenstoßbeschleunigung in der ersten Richtung bei zwei Positionen entfernt von der im Wesentlichen zentralen Fahrzeugposition und nahe gegenüberliegender Seiten des Fahrzeugs (12) und Vorsehen von Beschleunigungssignalen (RAS_1BX; RAS_2BX), die eine Anzeige für diese bilden; und
eine Steuervorrichtung (70) zum Bestimmen eines Querzusammenstoßbewertungswerts (CCU_1Y_NFSigned_A_MA), der funktional in Beziehung zu dem zweiten Beschleunigungssignal (CCU_1Y) steht und Bestimmen der Fernzusammenstoßbewertungswerte (LRBX_SUM_NF; LRBX_SUM_MU), die funktional in Beziehung mit einer Summe der Beschleunigungssignale (RAS_1BX; RAS_2BX) bei den entfernten Positionen stehen,
wobei die Steuervorrichtung (70) ebenfalls den bestimmten Querzusammenstoßbewertungswert (CCU_1Y_NFSigned_A_MA) als eine Funktion der bestimmten Fernzusammenstoßbewertungswerte (LRBX_SUM_NF; LRBX_SUM_MU) mit assoziierten Schwellenwerten (152, 154) vergleicht, wobei die Steuervorrichtung (70) ferner einen Zusammenstoßzustand (134) des Fahrzeugs (12) bestimmt, und zwar ansprechend auf (a) den Vergleich und (b) das erste Beschleunigungssignal (CCU_1X).

9. Verfahren gemäß Anspruch 8, wobei die Steuervorrichtung (70) ebenfalls ein Betätigungssignal zur Betätigung einer betätigbaren Sicherheitseinrichtung (14, 16, 20, 24, 28, 29) des Fahrzeugs (12) ansprechend auf die Bestimmung eines Zusammenstoßzustands (134) des Fahrzeugs (12) vorsieht.

10. Verfahren gemäß Anspruch 8, wobei die Steuervorrichtung (70) den Querzusammenstoßbewertungswert (CCU_1Y_NFSigned_A_MA) als einen gleitenden Durchschnitt (∥A∥_MA_A_RAS_1BY; ∥A∥_MA_A_RAS_2BY) der Beschleunigung in der zweiten Richtung als eine Funktion des bestimmten Fernzusammenstoßbewertungswerts (LRBX_SUM_NF; LBX_SUM_MU) bestimmt.

11. Vorrichtung gemäß Anspruch 8, wobei die Steuervorrichtung (70) die Fernzusammenstoßbewertungswerte (LRBX_SUM_NF; LBX_SUM_MU) als eine Summe der gleitenden Durchschnitte der Beschleunigung in der ersten Richtung bei den entfernten Positionen bestimmt.

12. Vorrichtung gemäß Anspruch 8, wobei die Steuervorrichtung (70) eine Zusammenstoßgeschwindigkeit (VEL_REL_1X) und einen Zusammenstoßversatz (DISP_REL_1X) aus dem ersten Beschleunigungssignal (CCU_1X) bestimmt und die bestimmte Zusammenstoßgeschwindigkeit (VEL_REL_1X) als eine Funktion des bestimmten Zusammenstoßversatzes (DISP_REL_1X) mit entweder einem Diskriminierungsschwellenwert (78, 80) oder einem geschalteten Diskriminierungsschwellenwert (112) vergleicht, wobei die Steuervorrichtung (70) einen Zusammenstoßzustand (134) des Fahrzeugs (12) bestimmt, und zwar ansprechend sowohl darauf, dass (a) die bestimmte Zusammenstoßgeschwindigkeit (VEL_REL_1X) als eine Funktion des bestimmten Zusammenstoßversatzes (DISP_REL_1X) entweder den Diskriminierungsschwellenwert (78, 80) oder den geschalteten Diskriminierungsschwellenwert (112) übersteigt, als auch (b) der bestimmte Querzusammenstoßbewertungswert (CCU_1Y_NFSigned_A_MA) als eine Funktion der bestimmten Fernzusammenstoßbewertungswerte (LRBX_SUM_NF; LRBX_SUM_MU) die assoziierten Schwellenwerte (152, 154) übersteigt.

13. Vorrichtung gemäß Anspruch 12, wobei entweder der Diskriminierungs- und/oder der assoziierte Schwellenwert (78, 80, 112, 152, 152) ein variabler Schwellenwert ist.

14. Vorrichtung gemäß Anspruch 12, wobei entweder der Diskriminierungs- und/oder der assoziierte Schwellenwert (78, 80, 112, 152, 152) ein feststehender Schwellenwert ist.

15. Vorrichtung gemäß Anspruch 8, wobei der zweite Beschleunigungsmesser (32) bei einer im Wesentlichen zentralen Fahrzeugposition gelegen ist.

## Revendications

1. Procédé pour déterminer une condition de collision d'un véhicule (12), comprenant les étapes consistant à :
détecter une accélération de collision suivant une première direction essentiellement parallèle à un axe avant-arrière (X) du véhicule (12) à un emplacement de véhicule essentiellement central et fournir un premier signal d'accélération (CCU_1X) l'indiquant ;
détecter une accélération de collision suivant une seconde direction essentiellement parallèle à un axe côté à côté (Y) du véhicule (12) et fournir un second signal d'accélération (CCU_1Y) l'indiquant ;
détecter une accélération de collision suivant la première direction à deux emplacements distants de l'emplacement de véhicule essentiellement central et à proximité des côtés opposés du véhicule (12) et fournir des signaux d'accélération (RAS_1BX ; RAS_2BX) l'indiquant ;
déterminer une valeur d'évaluation de collision transversale (CCU_1Y_NFSigned_A_MA) associée de manière fonctionnelle au second signal d'accélération (CCU_1Y) ;
déterminer des valeurs d'évaluation de collision distantes (LRBX_SUM_NF ; LRBX_SUM_MU) associées de manière fonctionnelle à une somme des signaux d'accélération (RAS_1BX ; RAS_2BX) aux emplacements distants ;
comparer la valeur d'évaluation de collision transversale déterminée (CCU_1Y_NFSigned_A_MA) comme une fonction des valeurs d'évaluation de collision distantes déterminées (LRBX_SUM_NF ; LRBX_SUM_MU) à un seuil associé (152, 154) ; et
déterminer une condition de collision (134) du véhicule (12) en réponse à (a) la comparaison et (b) le premier signal d'accélération (CCU_1X).

2. Procédé selon la revendication 1, comprenant en outre l'étape consistant à fournir un signal d'activation pour activer un dispositif de sécurité pouvant être activé (14, 16, 20, 24, 26, 28, 29) du véhicule (12) en réponse à la détermination d'une condition de collision (134) du véhicule (12).

3. Procédé selon la revendication 1, dans lequel ladite étape consistant à déterminer une valeur d'évaluation de collision transversale (CCU_1Y_NFSigned_A_MA) associée de manière fonctionnelle au second signal d'accélération détecté (CCU_1Y) comprend les étapes consistant à :
déterminer une moyenne de déplacement (||A||_MA_A_RAS_1BY ; ||A||_MA_A_RAS_2BY) d'accélération suivant la seconde direction sur la base du second signal d'accélération (CCU_1Y), et
déterminer la valeur d'évaluation de collision transversale (CCU_1Y_NFSigned_A_MA) sur la base de la moyenne de déplacement déterminée (||A||_MA_A_RAS_1BY ; ||A||_MA_A_RAS_2BY) d'accélération suivant la seconde direction.

4. Procédé selon la revendication 3, dans lequel ladite étape consistant à déterminer des valeurs d'évaluation de collision distantes (LRBX_SUM_NF ; LRBX_SUM_MU) associées de manière fonctionnelle aux signaux d'accélération (RAS_1BX ; RAS_2BX) aux emplacements distants comprend l'étape consistant à déterminer une somme de moyennes de déplacement d'accélération suivant ladite première direction aux emplacements distants ; et
dans lequel ladite étape consistant à comparer la valeur d'évaluation de collision transversale déterminée (CCU_1Y_NFSigned_A_MA) à des seuils associés (152, 154) comprend l'étape consistant à comparer ladite moyenne de déplacement (||A||_MA_A_RAS_1BY ; ||A||_MA_A_RAS_2BY) d'accélération suivant la seconde direction, comme une fonction de la somme des moyennes de déplacement d'accélération suivant ladite première direction aux emplacements distants, aux seuils associés (152, 154).

5. Procédé selon la revendication 3, dans lequel ladite étape consistant à déterminer une moyenne de déplacement (||A||_MA_A_RAS_1BY ; ||A||_MA_A_RAS_2BY) d'accélération suivant ladite seconde direction sur la base du second signal d'accélération (CCU_1Y) comprend l'étape consistant à déterminer une moyenne de déplacement (||A||_MA_A_RAS_1BY ; ||A||_MA_A_RAS_2BY) d'accélération suivant ladite seconde direction sur la base de valeurs signées du second signal d'accélération (CCU_1Y).

6. Procédé selon la revendication 1, comprenant en outre les étapes consistant à :
déterminer une vitesse de collision (VEL_REL_1X) suivant ladite première direction à partir du premier signal d'accélération (CCU_1X) ;
déterminer un déplacement de collision (DISP_REL_1X) suivant ladite première direction à partir du premier signal d'accélération (CCU_1X) ;
comparer (76) la vitesse de collision déterminée (VEL_REL_1X) comme une fonction du déplacement de collision déterminé (DISP_REL_1X) à un seuil parmi un seuil de discrimination (78, 80) et un seuil de discrimination commuté (112) ; et
commuter le seuil de discrimination (78, 80) vers le seuil de discrimination commuté (112) quand la valeur métrique de collision déterminée comme une fonction du premier signal d'accélération détecté (CCU_1X) dépasse le seuil associé ; et
dans lequel ladite étape consistant à déterminer une condition de collision du véhicule (12) comprend l'étape consistant à déterminer une condition de collision du véhicule (12) en réponse à la vitesse de collision déterminée (VEL_REL_1X) comme une fonction du déplacement de collision déterminé (DISP_REL_1X) dépassant un des seuils parmi le seuil de discrimination (78, 80) et le seuil de discrimination commuté (112) et la valeur d'évaluation de collision transversale déterminée (CCU_1Y_NFSigned_A_MA) comme une fonction des valeurs d'évaluation de collision distantes déterminées (LRBX_SUM_NF ; LRBX_SUM_MU) dépassant les seuils associés (152, 154).

7. Procédé pour déterminer une condition de collision d'un véhicule (12), comprenant les étapes consistant à :
détecter une accélération de collision suivant une première direction essentiellement parallèle à un axe avant-arrière (X) du véhicule (12) à un emplacement de véhicule essentiellement central et fournir un signal d'accélération avant-arrière (CCU_1X) l'indiquant ;
détecter une accélération de collision suivant une seconde direction essentiellement parallèle à un axe côté à côté (Y) du véhicule (12) à un emplacement essentiellement central et fournir un signal d'accélération côté à côté (CCU_1Y) l'indiquant ;
détecter une accélération de collision suivant la première direction à deux emplacements distants de l'emplacement de véhicule essentiellement central et à proximité des côtés opposés du véhicule (12) et fournir des signaux d'accélération avant-arrière distants (RAS_1BX ; RAS_2BX) l'indiquant ;
détecter une accélération de collision suivant la seconde direction à proximité des côtés opposés du véhicule (12) et fournir des signaux d'accélération côté à côté distants (RAS_1BY ; RAS_2BY) l'indiquant ;
déterminer une valeur d'évaluation de collision côté à côté (CCU_1Y_NFSigned_A_MA) associée de manière fonctionnelle au signal d'accélération central côté à côté (CCU_1Y) ;
déterminer des valeurs d'évaluation de collision distantes avant-arrière (LRBX_SUM_NF ; LRBX_SUM_MU) associées de manière fonctionnelle aux signaux d'accélération distants avant-arrière (RAS_1BX ; RAS_2BX) ;
déterminer des valeurs d'évaluation de collision distantes côté à côté associées de manière fonctionnelle aux signaux d'accélération distants côté à côté (RAS_1BY ; RAS_2BY) ;
comparer la valeur d'évaluation de collision centrale côté à côté déterminée (CCU_1Y_NFSigned_A_MA) comme une fonction des valeurs d'évaluation de collision distantes avant-arrière déterminées (LRBX_SUM_NF ; LRBX_SUM_MU) à un seuil associé (152, 154) ;
comparer les valeurs d'évaluation de collision distantes côté à côté déterminées à un seuil de mise en sécurité associé (132) ;
comparer la valeur d'évaluation de collision centrale côté à côté déterminée (CCU_1Y_NFSigned_A_MA) comme une fonction de la valeur du signal d'accélération central avant-arrière (CCU_1X) à un seuil associé ; et
déterminer une condition de collision (134) du véhicule (12) en réponse aux comparaisons et au signal d'accélération central avant-arrière (CCU_1X).

8. Appareil (10) pour déterminer une condition de collision d'un véhicule (12), ledit appareil (10) comprenant :
un premier accéléromètre (32) pour détecter une accélération de collision suivant une première direction essentiellement parallèle à un axe avant-arrière (X) du véhicule (12) à un emplacement du véhicule essentiellement central et fournir un premier signal d'accélération (CCU_1X) l'indiquant ;
un deuxième accéléromètre (36) pour détecter une accélération de collision suivant une seconde direction essentiellement parallèle à un axe côté à côté (Y) du véhicule (12) et fournir un second signal d'accélération (CCU_1Y) l'indiquant ;
des troisièmes accéléromètres (40, 46) pour détecter une accélération de collision suivant la première direction à deux emplacements distants de l'emplacement de véhicule essentiellement central et à proximité de côtés opposés du véhicule (12) et fournir des signaux d'accélération (RAS_1BX ; RAS_2BX) l'indiquant ; et
un contrôleur (70) pour déterminer une valeur d'évaluation de collision transversale (CCU_1Y_NFSigned_A_MA) associée de manière fonctionnelle au second signal d'accélération (CCU_1Y) et déterminant des valeurs d'évaluation de collision distantes (LRBX_SUM_NF ; LRBX_SUM_MU) associées de manière fonctionnelle à une somme des signaux d'accélération (RAS_1BX ; RAS_2BX) aux emplacements distants, le contrôleur (70) comparant en outre la valeur d'évaluation de collision transversale déterminée (CCU_1Y_NFSigned_A_MA) comme une fonction des valeurs d'évaluation de collision distantes déterminées (LRBX_SUM_NF ; LRBX_SUM_MU) à des seuils associés (152, 154), le contrôleur (70) déterminant en outre une condition de collision (134) du véhicule (12) en réponse à (a) la comparaison et (b) le premier signal d'accélération (CCU_1X).

9. Appareil selon la revendication 8, dans lequel ledit contrôleur (70) fournit en outre un signal d'activation pour activer un dispositif de sécurité pouvant être activé (14, 16, 20, 24, 28, 29) du véhicule (12) en réponse à la détermination d'une condition de collision (134) du véhicule (12).

10. Appareil selon la revendication 8, dans lequel ledit contrôleur (70) détermine la valeur d'évaluation de collision transversale (CCU_1Y_NFSigned_A _MA) comme une moyenne de déplacement (||A||_MA_A_RAS_1BY ; ||A||_MA_A_RAS_2BY) d'accélération suivant la seconde direction comme une fonction des valeurs d'évaluation de collision distantes déterminées (LRBX_SUM_NF ; LRBX_SUM_MU).

11. Appareil selon la revendication 8, dans lequel ledit contrôleur (70) détermine les valeurs d'évaluation de collision distantes (LRBX_SUM_NF ; LRBX_SUM_MU) comme une somme des moyennes de déplacement d'accélération suivant ladite première direction aux emplacements distants.

12. Appareil selon la revendication 8, dans lequel ledit contrôleur (70) détermine en outre une vitesse de collision (VEL_REL_1X) et un déplacement de collision (DISP_REL_1X) à partir du premier signal d'accélération (CCU_1X) et compare la vitesse de collision déterminée (VEL_REL_1X) comme fonction du déplacement de collision déterminé (DISP_REL_1X) à un seuil parmi un seuil de discrimination (78, 80) et un seuil de discrimination commuté (112), le contrôleur (70) déterminant une condition de collision (134) du véhicule (12) en réponse à la fois à (a) la vitesse de collision déterminée (VEL_REL_1X) comme une fonction du déplacement de collision déterminé (DISP_REL_1X) dépassant un des seuils parmi le seuil de discrimination (78, 80) et le seuil de discrimination commuté (112) et (b) la valeur d'évaluation de collision transversale déterminée (CCU_1Y_NFSigned_A_MA) comme une fonction des valeurs d'évaluation de collision distantes déterminées (LRBX_SUM_NF ; LRBX_SUM_MU) dépassant les seuils associés (152, 154).

13. Appareil selon la revendication 12, dans lequel au moins un seuil parmi les seuils de discrimination et associés (78, 80, 112, 152, 154) est un seuil variable.

14. Appareil selon la revendication 12, dans lequel au moins un seuil parmi les seuils de discrimination et associés (78, 80, 112, 152, 154) est un seuil fixe.

15. Appareil selon la revendication 8, dans lequel le deuxième accéléromètre (32) est situé à un emplacement du véhicule essentiellement central.
